**Europäisches Patentamt**

**European Patent Office**

**Office européen des brevets**

(19)

(11) Veröffentlichungsnummer: **0 257 208 B1**

(12) # EUROPÄISCHE PATENTSCHRIFT

(45) Veröffentlichungstag der Patentschrift: **17.04.91**

(51) Int. Cl.⁵: **H02B 1/04**, H01H 13/02

(21) Anmeldenummer: **87107449.8**

(22) Anmeldetag: **22.05.87**

(54) **Kopfteil für Befehls- und/oder Meldegeräte für den Frontplatteneinbau.**

(30) Priorität: **30.06.86 DE 3621931**

(43) Veröffentlichungstag der Anmeldung:
**02.03.88 Patentblatt 88/09**

(45) Bekanntmachung des Hinweises auf die
Patenterteilung:
**17.04.91 Patentblatt 91/16**

(84) Benannte Vertragsstaaten:
**CH DE ES FR GB IT LI**

(56) Entgegenhaltungen:
**EP-A- 0 037 896      EP-A- 0 080 559**
**EP-A- 0 080 807      DE-A- 1 665 074**
**DE-B- 2 250 621      FR-A- 1 485 615**

(73) Patentinhaber: **Elan Schaltelemente GmbH**
**Hauptstrasse 97**
**W-6301 Wettenberg 1(DE)**

(72) Erfinder: **Willems, Jürgen**
**Karlsruher Strasse 58**
**W-4000 Düsseldorf-Eller(DE)**
Erfinder: **Beyer, Detlev**
**Lübisrather Strasse 58**
**W-4040 Neuss 26(DE)**
Erfinder: **Schöning, Ewald**
**Eichenstrasse 100**
**W-4010 Hilden(DE)**

(74) Vertreter: **Sparing - Röhl - Henseler Patentan-**
**wälte**
**Rethelstrasse 123 Postfach 14 02 68**
**W-4000 Düsseldorf 1(DE)**

**Beschreibung**

Die Erfindung betrifft ein Kopfteil für Befehls- und/oder Meldegeräte für den Frontplatteneinbau nach dem Oberbegriff des Anspruchs 1.

Ein derartige Ausführung ist in der DE-A- 1 665 074 beschrieben.

Für Befehls- und/oder Meldegeräte für den Frontplatteneinbau ist ein möglichst modularer Aufbau der einzelnen Komponenten zur Erzielung einer möglichst wenig aufwendigen Montage bzw. Demontage beim Anwender erwünscht. Häufig werden aus ergonomischen und optischen Gründen unterschiedliche Fronthöhen für die Bedienköpfe gefordert, um beispielsweise einen "Blindbetrieb" zu ermöglichen. Hierzu war es bisher erforderlich, zwei verschiedene Geräteprogramme vorzusehen.

Aufgabe der vorliegenden Erfindung ist es, ein Kopfteil der eingangs genannten Art zu schaffen, das sowohl einen vorstehenden, als auch einen versenkten Frontplatteneinbau und damit unterschiedliche Fronthöhen ermöglicht.

Diese Aufgabe wird entsprechend dem kennzeichnenden Teil des Anspruchs 1 gelöst.

Hierbei benötigt man beispielsweise für den vorstehenden Frontplatteneinbau entsprechende normmäßige Bohrungen in der Frontplatte, während für den versenkten Frontplatteneinbau lediglich entsprechend größere Bohrungen oder quadratische Durchbrüche vorgesehen werden müssen. Bei beiden Einbauarten erfolgt die Befestigung durch die Kontermutter, während die Dichtigkeit durch die Frontplattendichtungen, die im jeweiligen Einbaufall durch die Kontermutter gegen die Frontplatte gepresst werden, gewährleistet wird.

Bei den Befehls- und/oder Meldegeräten kann es sich im Drucktaster, Leuchttaster, Leuchtmelder, Wahlschalter, Schlüsselschalter, Not-Aus-Schalter etc. handeln, wie sie üblicherweise für unterschiedliche Befehls- und Meldeaufgaben von der industriellen Steuerungstechnik benötigt werden.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

Fig. 1 zeigt ein Kopfteil für Befehls- und/oder Meldegeräte im Schnitt im vorstehenden Frontplatteneinbau (linke Seite) und im versenkten Frontplatteneinbau (rechte Seite).

Fig. 2 zeigt eine weitere Ausführungsform einer Hülse für ein Kopfteil ausschnittweise und im Schnitt.

Fig. 3 zeigt einen Schnitt längs der Linie III-III von Fig. 2.

Das dargestellte Kopfteil 10 umfaßt eine Hülse 11 mit einem frontseitigen Kragen 12 und einem sich zum rückwärtigen Ende erstreckenden Außengewindeabschnitt 13. Ferner weist das Kopfteil 10 eine umlaufende Aufstandsschulter 14 auf, die gestuft ausgebildet ist und einen inneren Abschnitt 14' und einen zur Frontseite der Hülse 11 versetzten Außenabschnitt 14" aufweist.

Zum vorstehenden Frontplatteneinbau wird eine Frontplatte 15 mit einer Normbohrung 16 versehen, deren Durchmesser dem Durchmesser des Außengewindeabschnittes 13 der Hülse 11 entspricht. Die Hülse 11 wird in die Bohrung 16 eingesetzt, wobei zwischen dem inneren Abschnitt 14' der Schulter 14 und der Frontseite der Frontplatte 15 eine umlaufende Frontplattendichtung 17 angeordnet wird. Zwischen dem Außenabschnitt 14" der Schulter 14 und der Frontseite der Frontplatte 15 wird ein Frontring 18 angeordnet, der außenseitig bündig mit dem Kragen 12 der Hülse 11 verläuft, und dessen Innendurchmesser bzw. Innenquadrat dem Außendurchmesser bzw. Außenquadrat des inneren Abschnitts 14' der Aufstandsschulter 14 entspricht. Der Frontring 18 deckt die Frontplattendichtung 17 nach außen hin ab, wenn das Kopfteil 10 mittels einer Kontermutter 19 an der Frontplatte 15 festgeschraubt wird. Hierdurch wird ferner die Frontplattendichtung 17 zwischen der Hülse 11, der Frontplatte 15 und dem Frontring 18 eingepresst, um eine gute Dichtwirkung zu erzielen.

Die Hülse 11 nimmt in ihrem Inneren beispielsweise einen Betätiger 20 in Form einer Taste auf, der mit einem rohrförmigen und gestuften Abschnitt 21 in der Hülse 11 geführt ist. Die Hülse 11 besitzt ebenfalls eine Stufe, die der Stufe des Abschnitts 21 gegenüberliegt, und zwischen denen eine Druckfeder 22 zum Rückstellen des Tasters 20 nach dessen Betätigung angeordnet ist. Der rohrförmige Abschnitt 21 des Tasters 20 besitzt ferner an seinem Außenumfang eine Nut zur Aufnahme einer Schleifdichtung 23 zur Abdichtung zwischen der Innenseite der Hülse 11 und der Außenseite des rohrförmigen Abschnitts 21 der Taste 20. Außerdem besitzt die Taste 20 frontseitig ein Kappenteil 24, das von dem Kragen 12 der Hülse 11 umgeben wird und in einer zylindrischen oder quadratischen Ausnehmung 25 gegen die Kraft der Rückstellfeder 22 um eine vorbestimmte Strecke eindrückbar angeordnet ist.

Die Taste 20 dient zur Betätigung eines oder mehrerer Kontaktelemente 25, das oder die an der Hülse 11 befestigt ist oder sind.

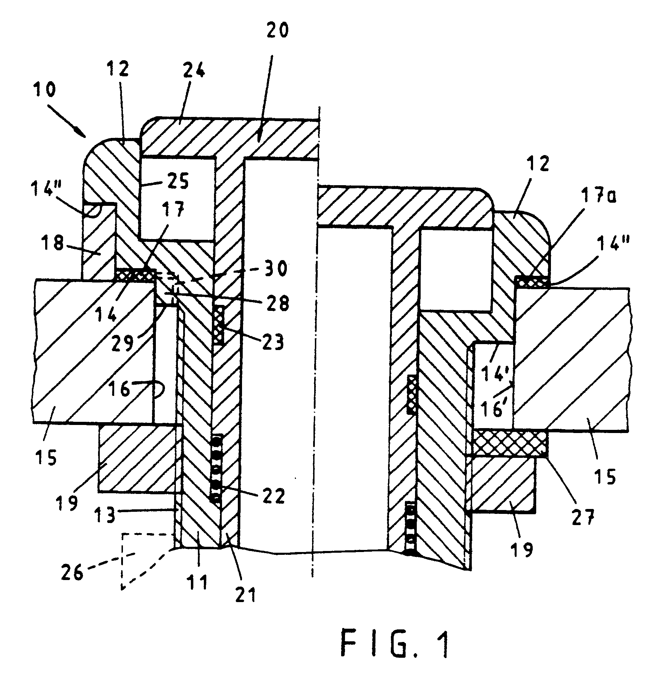

Zum versenkten Frontplatteneinbau, wie er auf der rechten Seite von Fig. 1 dargestellt ist, werden der Frontring 18 und die Frontplattendichtung 17 entfernt, die Frontplatte 15 mit einer Bohrung 16' bzw. Quadrat versehen, deren Durchmesser bzw. Quadrat mit Außendurchmesser bzw. Außenquadrat des inneren Abschnitts 14' der Schulter 14 entspricht, das Kopfteil 10 in die Bohrung 16' bzw.

Quadrat der Frontplatte 15 eingesetzt, so daß sich der Außenabschnitt 14″ der Aufstandsschulter 14 frontseitig an der Frontplatte 15 über eine Dichtung 17a abstützt, während die Führung durch den axial verlaufenden Abschnitt zwischen den beiden Abschnitten 14′, 14″ in der Bohrung 16′ bzw. Quadrat gewährleistet wird. Von der Rückseite wird ein Druckring 27 auf den Außengewindeabschnitt 13 aufgeschoben und dann die Kontermutter 19 angebracht.

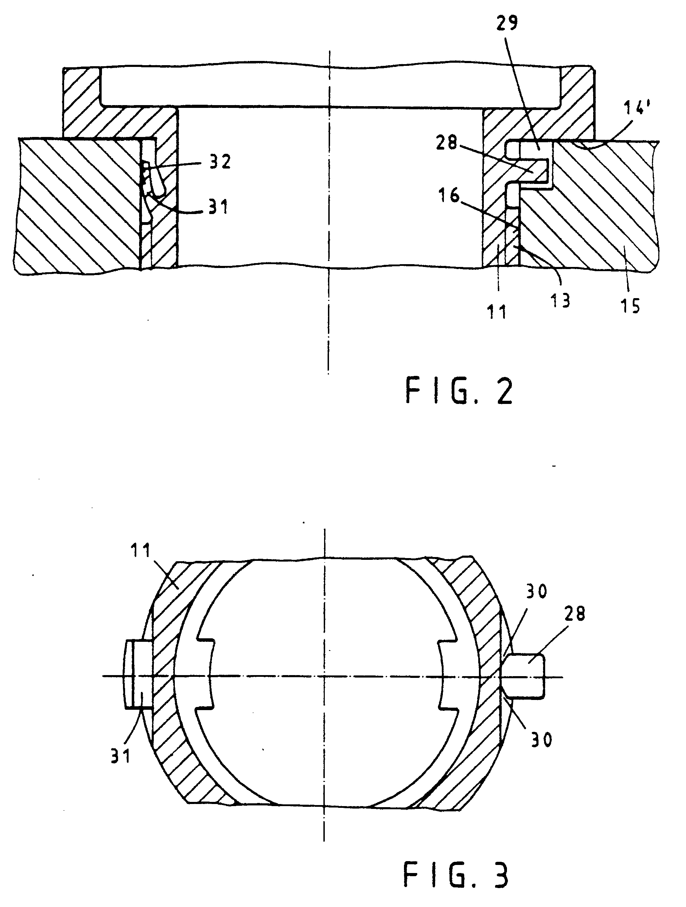

Wie in Fig. 2 dargestellt, kann die Hülse 11 mit einer Verdrehsicherung in Form einer Haltenase 28 versehen sein, die in eine entsprechende Nut 29 benachbart zur Bohrung 16 der Frontplatte 15 eingesetzt wird. Die Haltenase 28 kann mit einer vorgeprägten Nut 30 beidseitig versehen sein, so daß die Haltenase 28 infolge der Nuten 30 leichter abbrechbar ist, wenn sie nicht benötigt wird. Sowohl an dem Abschnitt 14′ als auch an dem Abschnitt 14″ kann eine Haltenase 28 vorgesehen sein.

Außerdem kann benachbart zum Außengewindeabschnitt 13 eine Verklemmnase 31 vorgesehen sein, die beweglich mit der Hülse 11 verbunden ist, eine geringe Stärke und gegebenenfalls eine äußere Zähnung 32 aufweist, damit sie beim Einsetzen der Hülse 11 in die Bohrung 16 die Hülse 11 in dieser verklemmt, so daß die Hülse 11 selbsttätig in der Bohrung 16 hält. Die Verklemmnase 31 ist zur Aufstandsschulter 14 geneigt angeordnet, damit sie sich beim Einführen der Hülse 11 in die Bohrung 16 in Richtung zur Aufstandsschulter 14 umlegt.

Je nach Einbauart werden der Druckring 27 oder der Frontring 18 und die Frontplattendichtungen 17, 17a von dem Kopfteil 10 entfernt. Falls genügend Platz vorhanden ist, kann der Druckring 27 auch bei vorstehendem Frontplatteneinbau verwendet werden.

**Ansprüche**

1. Kopfteil für Befehls- und/oder Meldegeräte für den Frontplatteneinbau mit einer in eine Bohrung der Frontplatte (15) einsteckbaren Hülse, die frontseitig einen Kragen (12), der eine umlaufende Aufstandsschulter (14) zur Abstützung an der Frontseite der Frontplatte über eine Frontplattendichtung (17) besitzt, und einen sich zum rückwärtigen Ende erstreckenden Außengewindeabschnitt (13), auf dem sich eine Kontermutter (19) befindet, aufweist, sowie einen Melder und/oder Betätiger aufnimmt, dadurch gekennzeichnet, daß die Aufstandsschulter (14) gestuft ist und einen zur Frontseite der Hülse (11) versetzten Außenabschnitt (14′) aufweist, wobei für den vorstehenden Frontplatteneinbau ein Frontring (18) vorgesehen ist, der im festgeschraubten Zustand des Kopfteils zwischen dem Außenabschnitt (14″) und der Frontplatte (15) die Frontplattendichtung (17) von außen abdeckend angeordnet ist, und wobei für den versenkten Frontplatteneinbau ein Druckring (27) zwischen der Rückseite der Frontplatte (15) und der Kontermutter (19) vorgesehen ist, wobei sich im festgeschraubten Zustand des Kopfteils der Außenabschnitt (14″) auf der Frontplatte (15) frontseitig abstützt.

2. Kopfteil nach Anspruch 1, dadurch gekennzeichnet, daß im Bereich der Aufstandsschulter (14) eine Verdrehsicherung (28) vorgesehen ist.

3. Kopfteil nach Anspruch 2, dadurch gekennzeichnet, daß die Verdrehsicherung aus einer Haltenase (28) besteht.

4. Kopfteil nach Anspruch 3, dadurch gekennzeichnet, daß die Haltenase (28) abbrechbar an der Hülse (11) angeordnet ist.

5. Kopfteil nach einem der Ansprüche 1 bis 4, dadurch gekennzeichnet, daß der Frontring (18) außenseitig bündig mit dem Kragen (12) der Hülse (11) ist.

6. Kopfteil nach einem der Ansprüche 1 bis 5, dadurch gekennzeichnet, daß benachbart zu dem Außengewindeabschnitt (13) eine dünne flexible Verklemmnase (31) vorgesehen ist.

7. Kopfteil nach Anspruch 6, dadurch gekennzeichnet, daß die Verklemmnase (31) außenseitig eine Verzahnung (32) trägt.

**Claims**

1. Cap member for an actuator and/or a signal device for front mounting on panels, said member having a sleeve which can be inserted in an aperture in a front panel (15), said sleeve having at the front a collar (12) which has a peripheral supporting shoulder (14) serving to bear against the front of the panel through a front panel seal (17), and an external screw-threaded portion (13) which extends to the rear and which carries a securing nut (19), the sleeve further accommodating a signal and/or actuator device, characterised by the fact that the supporting shoulder (14) is stepped and has an external portion (14′) offset and to the front of the sleeve (11), the projecting front panel mounting having a front ring (18) which, when the cap member is secured between the outer portion (14") and the front panel (15), is arranged to externally hide the front panel seal (17) and the countersunk front panel mounting having a pressure ring (27) provided between the rear of the front panel (15) and the nut (19), the outer portion (14") bearing against the front of the front panel (15) when the cap member is secured.

2. Cap member in accordance with Claim 1, characterised by the fact that an anti-torsion device (28) is provided in the zone of the supporting shoulder (14).

3. Cap member in accordance with Claim 2, characterised by the fact that the anti-torsion device consists of a securing lug (28).

4. Cap member in accordance with Claim 3, characterised by the fact that the securing lug (28) is mounted on the sleeve (11) in such a way that it can be broken off.

5. Cap member in accordance with any one of Claims 1 to 4, characterised by the fact that the outside of the front ring (18) is flush with the collar (12) of the sleeve (11).

6. Cap member in accordance with any one of Claims 1 to 5, characterised by the fact that a thin flexible clamping lug (31) is provided adjacent to the external screw-threaded portion (13).

7. Cap member in accordance with Claim 6, characterised by the fact that the clamping lug (31) is provided externally with a system of teeth (32).

**Revendications**

1. Elément de tête pour appareils de commande et/ou de signalisation à monter dans des panneaux frontaux, comportant une douille à insérer dans un perçage du panneau frontal (15), laquelle comporte sur la face avant un collet (12) qui possède un épaulement d'appui (14) continu, destiné à prendre appui contre la face avant du panneau frontal, par un organe d'étanchéité (17) de panneau frontal et une section filetée (13) s'étendant vers l'extrémité arrière sur laquelle se trouve un contre-écrou (19), ainsi qu'un avertisseur et/ou actionneur, caractérisé en ce que l'épaulement d'appui (14) est étagé et présente une section extérieure (14') décalée par rapport à la face avant de la douille (11), une bague frontale (18) étant prévue pour le montage en saillie sur le panneau frontal et qui, à l'état fermement vissé de l'élément de tête, est disposée entre la section extérieure (14") et le panneau frontal (15), de manière à recouvrir de l'extérieur l'organe d'étanchéité (17) du panneau frontal et dans lequel il est prévu, pour le montage encastré dans le panneau frontal, une bague de pression (27), entre la face arrière du panneau frontal (15) et le contre-écrou (19), la section extérieure (14") prenant appui sur la face avant du panneau frontal (15), à l'état fermement vissé de l'élément de tête.

2. Elément de tête selon la revendication 1, caractérisé en ce qu'il est prévu un blocage en rotation (28) dans la région de l'épaulement d'appui (14).

3. Elément de tête selon la revendication 2, caractérisé en ce que le blocage en rotation est constitué par un ergot de maintien (28).

4. Elément de tête selon la revendication 3, caractérisé en ce que l'ergot de maintien (28) est placé sur la douille (11) et cassable.

5. Elément de tête selon l'une des revendications 1 à 4, caractérisé en ce que la bague frontale (18) est alignée extérieurement avec le collet (12) de la douille (11).

6. Elément de tête selon l'une des revendications 1 à 5, caractérisé en ce qu'il est prévu un ergot de blocage (31) flexible et mince, à proximité de la section filetée (13).

7. Elément de tête selon la revendication 6, caractérisé en ce que l'ergot de blocage (31) porte extérieurement une denture (32).

FIG. 1

FIG. 2

FIG. 3